# FASCICULE DE BREVET EUROPEEN

(11) **EP 3 855 068 B1**
(45) Date de publication et mention de la délivrance du brevet: **04.03.2026**
(21) Numéro de dépôt: 21151219.9
(22) Date de dépôt: 12.01.2021
(51) Int. Cl.: F21V 8/00, G02B 6/34, G02B 6/124

(54) **DISPOSITIF DE PROJECTION DISTRIBUÉE DE LUMIÈRE**
VORRICHTUNG ZUR VERTEILTEN LICHTPROJEKTION
DEVICE FOR DISTRIBUTED PROJECTION OF LIGHT

(30) Priorité: 24.01.2020 FR 2000694
(43) Date de publication de la demande: 28.07.2021
(73) Titulaire: Commissariat à l'Energie Atomique et aux Energies Alternatives, 75015 Paris (FR)
(72) Inventeur: MARTINEZ, Christophe, 38054 Grenoble Cedex 9 (FR); FOWLER, Daivid, 38054 Grenoble Cedex 9 (FR); MEYNARD, Basile, 38054 Grenoble Cedex 9 (FR)
(74) Mandataire: Cabinet Beaumont

(56) Documents cités:
- WO-A1-2019/171806
- WO-A1-2021/080734
- US-A1- 2009 129 116
- US-A1- 2013 343 705

## Description

### Domaine technique

La présente description concerne de façon générale les dispositifs optiques, et vise plus particulièrement un dispositif de projection distribuée de lumière.

### Technique antérieure

La demande de brevet US2015/0370073, précédemment déposée par le demandeur, et l'article intitulé "See-through holographic retinal projection display concept", de Christophe Martinez et al. (Optica, Vol. 5, Issue 10, pp. 1200-1209 (2018)), décrivent des exemples de réalisation d'un dispositif de projection rétinienne pouvant être intégré dans un verre de lunette. Ce dispositif comporte une ou plusieurs sources laser distribuées à la surface du verre par un réseau de guides d'ondes. La lumière guidée est extraite en différents points de la surface du verre par des cellules d'extraction, et projetée sur la rétine d'un utilisateur ou d'une utilisatrice.

Le document US 2009/129116 A1 décrit un guide de lumière comportant une section de réseau de diffraction disposée sur un corps principal et comportant une pluralité de réseaux constitués d'un diélectrique disposés en parallèle à un intervalle compris entre une longueur d'onde et la moitié de la longueur d'onde.

Pour améliorer la qualité des images perçues, il serait souhaitable que l'intensité de la lumière extraite par les différentes cellules d'extraction soit uniforme sur toute la surface du verre. Pour cela, il convient que le coefficient d'extraction, c'est-à-dire le pourcentage de la lumière guidée extraite par chaque cellule d'extraction, augmente au fur et à mesure que l'on s'éloigne de l'extrémité d'entrée des guides.

Plus généralement, il existe diverses applications dans lesquelles il serait souhaitable de pouvoir extraire de la lumière en différentes régions d'un guide d'onde, avec des coefficients d'extraction variant selon un profil prédéfini le long du guide.

### Résumé de l'invention

L'invention prévoit un dispositif de projection distribuée de lumière, selon la revendication 1. Différents modes de réalisation sont exposés dans les revendications dépendantes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de dessus illustrant de façon schématique un exemple d'un dispositif de projection distribuée de lumière selon un mode de réalisation ;
la figure 2 représente quatre vues en coupe transversales du dispositif de la figure 1 ;
la figure 3 représente une vue en coupe longitudinale du dispositif de la figure 1 ;
la figure 4 est une vue en coupe longitudinale illustrant de façon schématique un exemple d'un dispositif de projection d'images utilisant un dispositif de projection distribuée de lumière du type décrit en relation avec les figures 1 à 3 ;
la figure 5 est une vue en coupe longitudinale illustrant de façon schématique un autre exemple d'un dispositif de projection d'images utilisant un dispositif de projection distribuée de lumière du type décrit en relation avec les figures 1 à 3 ;
la figure 6 est une vue en perspective illustrant une variante de réalisation du dispositif de projection d'images de la figure 5 ;
la figure 7 est une vue en perspective illustrant une autre variante de réalisation du dispositif de projection d'images de la figure 5 ;
la figure 8 est une vue en perspective illustrant de façon schématique un exemple d'un réseau à commande de phase optique ; et
la figure 9 est une vue en perspective illustrant de façon schématique un exemple d'un réseau à commande de phase optique utilisant un dispositif de projection distribuée de lumière du type décrit en relation avec les figures 1 à 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la description ci-après concerne principalement la réalisation d'un dispositif de projection distribuée comportant un ou plusieurs guides d'ondes et, couplées à chaque guide d'onde, plusieurs cellules d'extraction permettant d'extraire la lumière du guide selon un profil d'intensité prédéfini, par exemple, mais non nécessairement, un profil uniforme. Les diverses applications susceptibles de tirer profit d'un tel dispositif de projection n'ont pas été détaillées. On notera en particulier que l'application d'un tel dispositif à un dispositif de projection rétinienne du type décrit en relation avec la demande de brevet US2015/0370073 susmentionnée, et avec l'article susmentionné de Christophe Martinez et al., dont les contenus respectifs sont considérés comme faisant partie intégrante de la présente description, est à la portée de la personne du métier à la lecture de la présente description. Par ailleurs, les procédés de fabrication pouvant être mis en oeuvre pour réaliser les structures décrites n'ont pas été détaillés, les modes de réalisation décrits étant compatibles avec les procédés usuels de réalisation de composants optiques intégrés.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures, étant entendu que, en pratique, les dispositifs décrits peuvent être orientés différemment.

Sauf précision contraire, les expressions "environ", "approximativement", "sensiblement", et "de l'ordre de" signifient à 10 % près, de préférence à 5 % près.

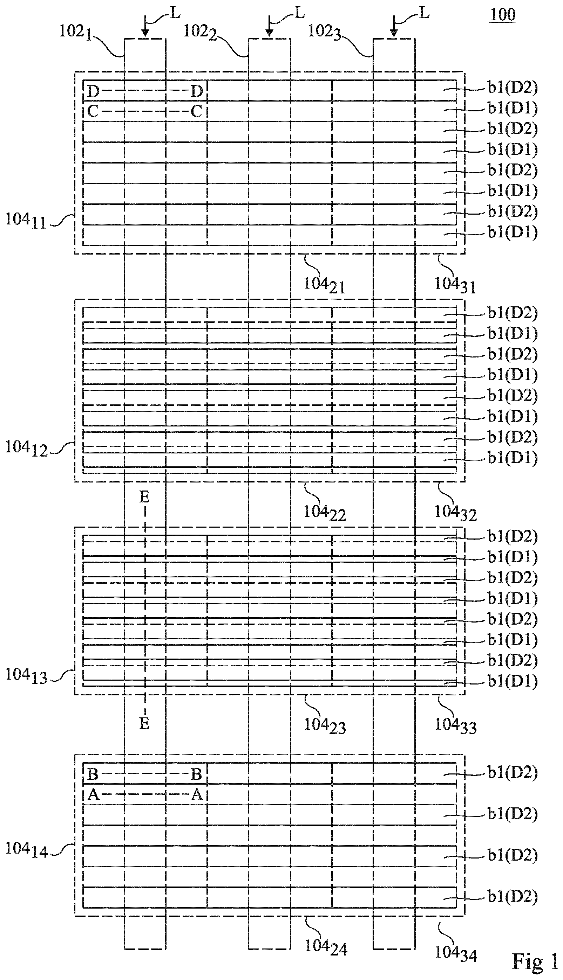

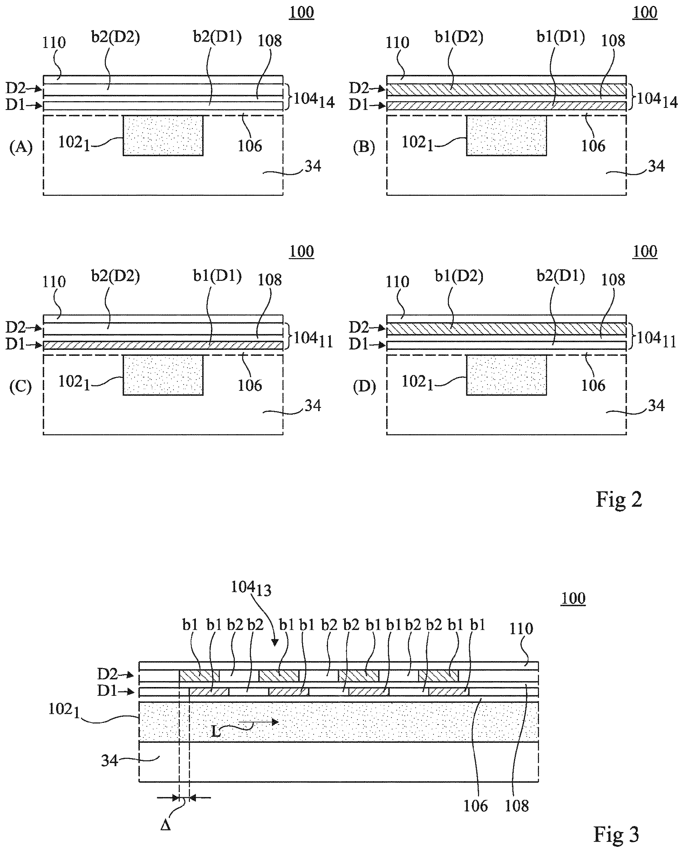

La figure 1 est une vue de dessus illustrant de façon schématique un exemple d'un dispositif 100 de projection distribuée de lumière selon un mode de réalisation. La figure 2 représente quatre vues en coupe transversales (A), (B), (C) et (D) du dispositif 100, selon respectivement les quatre plans de coupe A-A, B-B, C-C et D-D de la figure 1. La figure 3 représente une vue en coupe longitudinale (E) du dispositif 100, selon le plan de coupe E-E de la figure 1.

Le dispositif 100 des figures 1 à 3 comprend N guides d'ondes optiques 102ᵢ, avec N entier supérieur ou égal à 1 et i entier allant de 1 à N. Sur la figure 1, trois guides d'ondes 102₁, 102₂ et 102₃ ont été représentés. Seul le guide d'onde 102₁ est visible sur les vues en coupe des figures 2 et 3. Les guides d'ondes 102ᵢ sont formés dans ou sur un substrat transparent 34 (non visible sur la figure 1), par exemple un substrat en verre. On notera que dans la présente description, on entend par transparent un matériau transparent à la longueur d'onde ou aux longueurs d'ondes de la lumière projetée. Chaque guide d'onde 102ᵢ a la forme d'un ruban, par exemple à section transversale sensiblement rectangulaire. Dans l'exemple représenté, les guides d'ondes 102ᵢ ont la forme de rubans rectilignes parallèles. A titre de variante, les guides d'ondes 102ᵢ peuvent avoir la forme de ruban courbes, et/ou ne pas être parallèles entre eux. Les guides d'ondes 102ᵢ peuvent avoir des longueurs relativement importantes, par exemple comprises entre 0,1 mm et 10 cm, par exemple entre 0,5 mm et 5 cm. La densité des guides d'ondes 102ᵢ peut être relativement importante. En particulier, en vue de dessus, la distance entre deux guides 102ᵢ voisins peut être relativement faible, par exemple inférieure à 100 µm, par exemple inférieure à 10 µm, par exemple inférieure à 5 µm, par exemple de l'ordre de 1,5 µm.

Chaque guide d'onde 102ᵢ est en un matériau transparent ayant un premier indice de réfraction, par exemple du nitrure de silicium (SiN) d'indice de réfraction de l'ordre de 1,9, et est entièrement entouré, du côté de ses faces longitudinales, par un deuxième matériau transparent d'indice de réfraction inférieur au premier indice, par exemple du dioxyde de silicium (SiO₂) ou du verre d'indice de réfraction de l'ordre de 1,5. A titre de variante, les guides 102ᵢ peuvent être en silicium, entourés de dioxyde de silicium. Les modes de réalisation décrits ne se limitent pas à ces exemples particuliers.

Les guides d'ondes 102ᵢ sont des guides d'ondes monomodes, c'est-à-dire excités par un mode de propagation unique. A titre d'exemple, en section transversale, la plus grande dimension de chacun des guides d'ondes 102ᵢ n'excède pas 2 µm.

Dans l'exemple représenté, les guides d'ondes 102ᵢ sont situés dans un même plan moyen approximativement parallèle à une face supérieure du substrat 34. Autrement dit, les guides d'ondes 102ᵢ ont leurs axes longitudinaux respectifs sensiblement coplanaires, et parallèles à la face supérieure du substrat 34, et ont leurs faces supérieures, respectivement inférieures, sensiblement coplanaires, et parallèles à la face supérieure du substrat 34.

En pratique, chaque guide d'onde est couplé, à l'une de ses extrémités, à une source laser (non représentée), par exemple commandable en intensité, adaptée à injecter dans le guide un faisceau lumineux d'orientation constante, adapté à se propager dans le guide. Différents guides d'ondes 102ᵢ du dispositif peuvent être couplés à une même source laser, ou à des sources laser distinctes. Dans l'exemple de la figure 1, la direction principale de propagation de la lumière dans chaque guide d'onde a été représentée par une flèche référencée L.

Le dispositif 100 des figures 1 à 3 comprend en outre un dispositif d'extraction de lumière comportant, pour chaque guide d'onde 102ᵢ, M cellules d'extraction 104ᵢⱼ, avec M entier supérieur ou égal à 2 et j entier allant de 1 à M, couplées à des zones distinctes de la face supérieure du guide. Sur la figure 1, pour chaque guide d'onde 102ᵢ, quatre cellules d'extraction 104ᵢ₁, 104ᵢ₂, 104ᵢ₃ et 104ᵢ₄ ont été représentées. Les M cellules d'extractions 104ᵢⱼ de chaque guide d'onde 102ᵢ peuvent être réparties, par exemple, mais non nécessairement, de façon régulière, sur toute la longueur du guide.

Chaque cellule 104ᵢⱼ est adaptée à extraire une partie de la lumière se propageant dans le guide d'onde 102ᵢ sous-jacent et à projeter cette lumière vers l'extérieur du dispositif 100, notamment du côté de la face supérieure du dispositif 100.

Dans l'exemple des figures 1 à 3, pour chaque guide d'onde 102ᵢ, différentes cellules d'extraction 104ᵢⱼ du guide présentent des coefficients d'extraction différents, de façon à assurer une extraction de la lumière guidée selon un profil d'intensité prédéfini le long du guide, par exemple selon un profil d'intensité uniforme. Par coefficient d'extraction, on entend ici le rapport entre l'énergie lumineuse extraite du guide du fait de l'interaction avec la cellule d'extraction, et l'énergie lumineuse guidée propagée par le guide immédiatement avant la zone de couplage entre le guide et la cellule d'extraction. Dans l'exemple de la figure 1, le coefficient d'extraction est croissant au fur et à mesure que l'on s'éloigne de l'extrémité d'entrée du guide. Autrement dit, pour chaque cellule d'extraction 104ᵢⱼ à l'exception de la cellule 104ᵢ₁, le coefficient d'extraction de la cellule 104ᵢⱼ est supérieur à celui de la cellule 104ᵢⱼ₋₁, étant entendu que les cellules d'extraction 104ᵢⱼ sont distribuées le long du guide 102ᵢ par ordre d'indice j croissant, en partant de l'extrémité d'entrée du guide 102ᵢ.

Selon un aspect du mode de réalisation des figures 1 à 3, chaque cellule d'extraction 104ᵢⱼ comporte deux réseaux de diffraction D1 et D2 superposés. Chacun des réseaux D1 et D2 est constitué d'une alternance de bandes b1 d'un matériau transparent ayant un premier indice de réfraction, dit indice élevé, et de bandes b2 d'un matériau transparent d'indice de réfraction inférieur à celui des bandes b1, dit indice faible. Les bandes b1 du réseau D1 peuvent être en le même matériau que les bandes b1 du réseau D2, par exemple en nitrure de silicium, ou en un matériau différent. De façon similaire, les bandes b2 du réseau D1 peuvent être en le même matériau que les bandes b2 du réseau D2, par exemple en dioxyde de silicium ou un matériau polymère, ou en un matériau différent.

Dans l'exemple représenté, dans chacun des réseaux de diffraction D1 et D2, les bandes b1 et b2 du réseau sont disposées dans un même plan moyen sensiblement parallèle à la face supérieure du guide d'onde 102ᵢ sous-jacent. Autrement dit, les faces inférieures, respectivement supérieures, des bandes b1 et b2 de chaque réseau de diffraction sont sensiblement coplanaires, et parallèles à la face supérieure du guide d'onde 102ᵢ sous-jacent.

Dans cet exemple, dans chaque cellule d'extraction 104ᵢⱼ, les bandes b1 et b2 des réseaux de diffraction D1 et D2 de la cellule sont, en vue de dessus, orthogonales à l'axe longitudinal du guide d'onde 102ᵢ sous-jacent. Les modes de réalisation décrits ne se limitent pas à ce cas particulier. De préférence, les bandes b1 et b2 des réseaux de diffraction D1 et D2 de la cellule forment, en vue de dessus, un angle compris entre -45° et +45° avec la normale à l'axe longitudinal du guide d'onde 102ᵢ sous-jacent.

Par souci, de clarté, seules les bandes d'indice élevé b1 des réseaux D1 et D2 ont été représentées sur la vue de dessus de la figure 1. Sur les vues en coupe des figures 2 et 3, les bandes d'indice élevé b1 des réseaux D1 et D2 ont été hachurées pour mieux les distinguer des bandes d'indice faible b2, non hachurées.

Dans chaque cellule d'extraction 104ᵢⱼ, les réseaux de diffraction D1 et D2 ont chacun une période (ou pas) de l'ordre de ou inférieure à la longueur d'onde de la lumière guidée par le guide d'onde 102ᵢ sous-jacent.

selon l'invention revendiquée, dans chaque cellule d'extraction 104ᵢⱼ, les périodes des réseaux de diffraction D1 et D2 de la cellule sont identiques, aux dispersions de fabrication près. De plus, les périodes des réseaux de diffraction D1 et D2 des cellules d'extraction 104ᵢⱼ couplées à un même guide d'onde 102ᵢ peuvent être identiques, aux dispersions de fabrication près. De préférence, les périodes des réseaux de diffraction D1 et D2 des différentes cellules d'extraction 104ᵢⱼ du dispositif 100 sont identiques, aux dispersions de fabrication près. La prévision de réseaux D1 et D2 de même pas permet avantageusement de simplifier la fabrication du dispositif.

A titre d'exemple, dans chaque cellule d'extraction 104ᵢⱼ, les bandes b1 des réseaux de diffraction D1 et D2 sont de même largeur (en vue de dessus), et les bandes b2 des réseaux de diffraction D1 et D2 sont de même largeur (en vue de dessus), aux dispersions de fabrication près. De plus, les largeurs des bandes b1, respectivement b2 des cellules d'extractions couplées à un même guide d'onde peuvent être identiques, aux dispersions de fabrication près. De préférence les largeurs des bandes b1, respectivement b2 des différentes cellules d'extraction 104ᵢⱼ du dispositif sont identiques aux dispersions de fabrication près. La prévision de réseaux D1 et D2 présentant des bandes b1, respectivement b2 de même largeur permet avantageusement de simplifier la fabrication du dispositif. A titre de variante, les largeurs des bandes b1 et b2 d'un même réseau D1 et/ou D2 peuvent être différentes.

Dans l'exemple représenté sur les figures 2 et 3, les réseaux D1 et D2 ont des épaisseurs différentes. A titre de variante, les épaisseurs des réseaux D1 et D2 peuvent être identiques ou sensiblement identiques.

Dans l'exemples des figures 1 à 3, dans chaque cellule d'extraction 104ᵢⱼ, le réseau D1 est séparé de la face supérieure du guide d'onde 102ᵢ sous-jacent par une couche transparente 106 (non visible sur la figure 1), par exemple en dioxyde de silicium ou en un matériau polymère adhésif. Dans l'exemple représenté, la couche 106 est en contact, par sa face inférieure, avec la face supérieure du guide d'onde 102ᵢ, et par sa face supérieure, avec la face inférieure du réseau de diffraction D1. La couche 106 s'étend par exemple de façon continue au-dessus de sensiblement toute la surface supérieure du substrat 34. De plus, dans cet exemple, dans chaque cellule d'extraction 104ⱼⱼ, le réseau D2 est séparé du réseau D1 par une couche transparente 108 (non visible sur la figure 1), par exemple en dioxyde de silicium. Dans l'exemple représenté, la couche 108 est en contact, par sa face inférieure, avec la face supérieure du réseau de diffraction D1, et, par sa face supérieure, avec la face inférieure du réseau de diffraction D2. La couche 108 s'étend par exemple de façon continue au-dessus de sensiblement toute la surface supérieure du substrat 34. Par ailleurs, dans cet exemple, une couche transparente 110 (non visible sur la figure 1), par exemple en dioxyde de silicium ou en un matériau polymère adhésif, revêt la face supérieure du réseau de diffraction D2. Dans l'exemple représenté, la couche 110 est en contact, par sa face inférieure, avec la face supérieure du réseau de diffraction D2. La couche 110 s'étend par exemple de façon continue au-dessus de sensiblement toute la surface supérieure du substrat 34.

L'épaisseur de la couche 106 est par exemple comprise entre 10 et 500 nm, par exemple entre 20 et 200 nm. L'épaisseur de la couche 108 est par exemple comprise entre 5 et 100 nm, par exemple entre 10 et 50 nm. L'épaisseur du réseau D1 est par exemple comprise entre 10 et 150 nm, par exemple entre 20 et 60 nm. L'épaisseur du réseau D2 est par exemple comprise entre 10 et 500 nm, par exemple entre 50 et 150 nm.

Dans l'exemple des figures 1 à 3, on joue sur une valeur de décalage Δᵢⱼ (figure 3) entre les réseaux de diffraction D1 et D2 pour fixer le coefficient d'extraction de chaque cellule 104ᵢⱼ. Autrement dit, pour chaque guide d'onde 102ᵢ, différentes cellules d'extraction 104ᵢⱼ du guide présentent différentes valeurs de décalage Δᵢⱼ entre les réseaux de diffraction D1 et D2 de la cellule. Dans l'exemple représenté, la valeur de décalage Δᵢⱼ désigne la distance, en vue de dessus, entre un bord d'une bande b1 du réseau D1, et le bord correspondant (i.e. le bord d'une bande b1 tourné vers la même extrémité du guide d'onde 102ᵢ) le plus proche du réseau D2.

Dans l'exemple représenté, le décalage Δᵢⱼ entre les réseaux D1 et D2 d'une même cellule 104ᵢⱼ est constant sur toute la longueur de la cellule.

Lorsque le décalage Δᵢⱼ est nul (i.e. lorsque les réseaux D1 et D2 sont en phase), les effets respectifs des réseaux de diffraction D1 et D2 de la cellule tendent à se cumuler, ce qui conduit à maximiser l'extraction lumineuse. Au contraire, lorsque le décalage Δᵢⱼ est fort (i.e. lorsque les réseaux D1 et D2 sont en opposition de phase), les effets respectifs des réseaux de diffraction D1 et D2 tendent à s'annuler, ce qui conduit à minimiser l'extraction lumineuse.

A titre d'exemple, en se référant aux vues (A), (B), (C) et (D) de la figure 2, les réseaux D1 et D2 et les couches 106 et 108 peuvent être dimensionnés de façon que les régions du guide surmontées par une bande b1 du réseau D1 et non surmontées par une bande b1 du réseau D2, appelées ci-après régions C (correspondant à la vue (C) de la figure 2), présentent, pour le mode guidé, un indice effectif n_{C} sensiblement égal à l'indice effectif n_{D} des régions du guide surmontées par une bande b1 du réseau D2 et non surmontées par une bande b1 du réseau D1, appelées ci-après régions D (correspondant à la vue (D) de la figure 2). De préférence, les réseaux D1 et D2 et les couches 106 et 108 sont dimensionnés de façon que les régions du guide surmontées par une bande b1 du réseau D1 et par une bande b1 du réseau D2, appelées ci-après régions B (correspondant à la vue (B) de la figure 2), et les régions du guide non surmontées par une bande b1 du réseau D1 et non surmontées par une bande b1 du réseau D2, appelées ci-après régions A (correspondant à la vue (A) de la figure 2), présentent respectivement, pour le mode guidé, des indices effectifs n_{B} et n_{A} tels que la moyenne (nₐ+n_{b})/2 soit sensiblement égale à la moyenne (n_{c}+n_{d})/2.

Dans l'exemple représenté, le décalage Δᵢⱼ est relativement important dans la cellule d'extraction 104ᵢⱼ la plus proche de l'extrémité d'entrée du guide 102ᵢ, et tend à diminuer au fur et à mesure que l'on s'éloigne de ladite extrémité d'entrée du guide 102ᵢ. A titre d'exemple, le décalage Δᵢⱼ est maximal, par exemple égal à T/2 (où T désigne la période des réseaux D1 et D2) dans la cellule 104ᵢ₁ la plus proche de l'extrémité d'entrée du guide 102ᵢ, et est minimal, par exemple nul, dans la cellule 104_{iM} la plus éloignée de l'extrémité du guide 102ᵢ.

La personne du métier saura adapter les valeurs de décalage Δᵢⱼ des cellules d'extraction 104ᵢⱼ le long de chaque guide 102ᵢ, en fonction du profil d'extraction lumineuse souhaité. En effet, un avantage des cellules d'extraction 104ᵢⱼ décrites en relation avec les figures 1 à 3 est que l'on peut, en jouant sur la valeur de décalage Δᵢⱼ, moduler précisément le coefficient d'extraction de chaque cellule.

Dans l'exemple représenté, les valeurs de décalage Δᵢⱼ des cellules d'extraction 104ᵢⱼ de même rang j des différents guides d'ondes 102ᵢ sont identiques. Plus particulièrement dans cet exemple, les bandes b1 et b2 des réseaux de diffraction D1 et D2 des cellules d'extraction 104ᵢⱼ de même rang j des différents guides d'ondes 102ᵢ sont communes et s'étendent chacune, sans discontinuité, au-dessus des N guides d'ondes 102ᵢ du dispositif. Ceci simplifie la fabrication du dispositif. Ceci peut en outre permettre d'augmenter la densité d'intégration des guides. Les modes de réalisation décrits ne se limitent toutefois pas à ce cas particulier.

Dans l'exemple de la figure 1, dans chaque cellule d'extraction 104ᵢⱼ, chacun des réseaux D1 et D2 comprend une alternance de quatre bandes b1 d'indice élevé et de quatre bandes b2 d'indice faible. Les modes de réalisation décrits ne se limitent bien entendu pas à ce cas particulier. Plus généralement, le nombre de répétions du motif élémentaire du réseau (formé dans cet exemple par deux bandes b1 et b2 consécutives) peut être différent de 4, par exemple compris dans la plage allant de 1 à 100, par exemple dans la plage allant de 5 à 20.

Par ailleurs, dans l'exemple de la figure 1, les cellules d'extraction 104ᵢⱼ couplées à un même guide d'onde 102ᵢ sont disjointes, c'est-à-dire que, en vue de dessus, deux cellules consécutives 104ᵢⱼ et 104ᵢⱼ₊₁ sont séparées par une portion du guide 102ᵢ non surmontée par un réseau de diffraction. Les modes de réalisation décrits ne se limitent toutefois pas à ce cas particulier. A titre de variante, les cellules d'extraction 104ᵢⱼ couplées à un même guide d'onde 102ᵢ peuvent être jointives.

On a décrit ci-dessus des exemples de réalisation d'un dispositif de projection distribuée de lumière, permettant un contrôle précis du profil d'intensité de la lumière projetée sur toute la longueur de la zone d'extraction lumineuse.

Des exemples, non limitatifs, d'applications pouvant tirer profit d'un tel dispositif, vont maintenant être décrits.

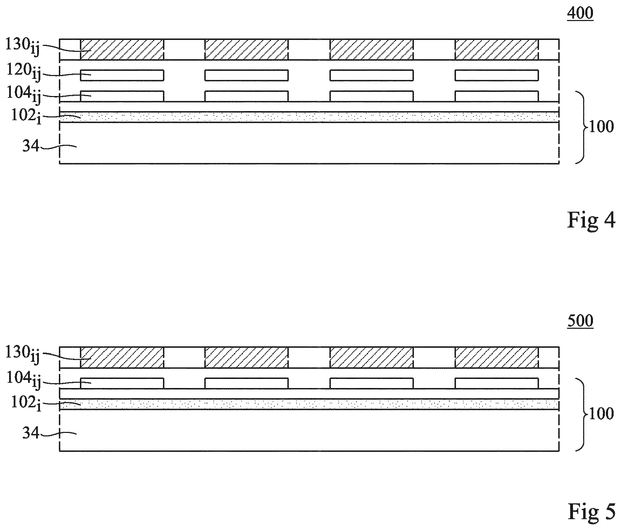

La figure 4 est une vue en coupe longitudinale illustrant de façon schématique un exemple d'un dispositif de projection d'images 400 utilisant un dispositif de projection distribuée de lumière 100 du type décrit en relation avec les figures 1 à 3. Le dispositif 400 est par exemple un dispositif de projection rétinienne du type décrit plus en détail dans la demande de brevet US2015/0370073 susmentionnée et/ou dans l'article susmentionné de Christophe Martinez et al.

Dans l'exemple de la figure 4, le dispositif de projection d'images 400 comprend, couplé à chaque cellule d'extraction 104ᵢⱼ, un élément de commande commutable 120ᵢⱼ permettant d'activer ou désactiver la cellule. Lorsque la cellule est activée, elle extrait une partie de la lumière se propageant dans le guide 102ᵢ sous-jacent. Lorsque la cellule est désactivée, elle n'a pas d'effet sur la lumière circulant dans le guide.

Dans l'exemple de la figure 4, le dispositif de projection d'images 400 comprend en outre, en vis-à-vis de chaque cellule d'extraction 104ᵢⱼ, un élément holographique 130ᵢⱼ adapté à orienter, dans une direction de projection souhaitée, le faisceau lumineux extrait du guide 102ᵢ par la cellule 104ᵢⱼ. Les éléments holographiques 130ᵢⱼ peuvent être des éléments holographiques transmissifs, ou réfléchissants.

Le dispositif 400 de la figure 4 permet de projeter des images quelconques, en jouant sur la commande à l'état actif ou inactif des cellules d'extraction 104ᵢⱼ, et sur l'intensité de la source ou des sources laser alimentant les guides d'ondes 102ᵢ.

La réalisation des éléments de commande 120ᵢⱼ et des éléments holographiques d'orientation 130ᵢⱼ n'a pas été détaillée, des exemples de réalisation de ces éléments étant décrits dans la demande de brevet US2015/0370073 susmentionnée et/ou dans l'article susmentionné de Christophe Martinez et al.

La figure 5 est une vue en coupe longitudinale illustrant de façon schématique un autre exemple d'un dispositif de projection d'images 500 utilisant un dispositif de projection distribuée de lumière du type décrit en relation avec les figures 1 à 3.

Le dispositif 500 de la figure 5 diffère du dispositif 400 de la figure 4 en ce qu'il ne comprend pas d'éléments 120ᵢⱼ de commande des cellules d'extraction 104ᵢⱼ. Autrement dit, dans le dispositif 500 de la figure 5, les cellules d'extraction 104ᵢⱼ sont toujours actives.

Le dispositif 500 est un dispositif simplifié, permettant d'afficher uniquement une image statique, par exemple un pictogramme, préalablement enregistrée dans la couche holographique contenant les éléments 130ᵢⱼ. L'affichage ou non de l'image préenregistrée est contrôlé en jouant sur l'activation ou non de la source laser alimentant les guides d'ondes.

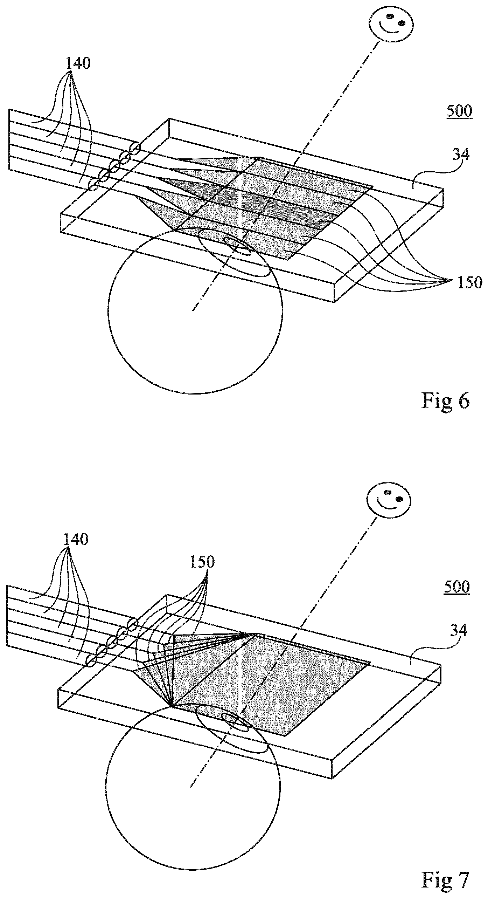

Les figures 6 et 7 sont des vues en perspective illustrant des variantes de réalisation du dispositif 500 de la figure 5.

Dans chacune de ces deux variantes, le dispositif 500 comprend plusieurs (cinq dans l'exemple représenté) sources laser 140 commandables individuellement, alimentant chacune un réseau spécifique 150 d'un ou plusieurs guides d'ondes 102ᵢ. Sur les figures 6 et 7, les guides d'ondes 102ᵢ, ainsi que les cellules d'extraction 104ᵢⱼ et les éléments holographiques 130ᵢⱼ d'orientation couplés à chaque guide d'onde 102ᵢ, ne sont pas détaillés. Chaque réseau de guides d'ondes 150 permet, lorsque la source laser 140 correspondante est allumée, de projeter, via les cellules d'extractions 104ᵢⱼ et les éléments holographiques 130ᵢⱼ correspondants, une image (ou un pictogramme) préenregistrée à la fabrication du dispositif. Ainsi, les dispositifs des figures 6 et 7 permettent de projeter simultanément ou séquentiellement, une ou plusieurs images parmi une pluralité (cinq dans l'exemple représenté) d'images préenregistrées.

Dans l'exemple de la figure 6, les différents réseaux de guides d'ondes 150 sont disposés les uns à côté des autres. Dans ce cas, l'oeil de l'utilisateur ou de l'utilisatrice doit légèrement se déplacer pour visualiser au mieux chaque image projetée.

Dans l'exemple de la figure 7, les différents réseaux de guides d'ondes 150 sont entrelacés et s'étendent chacun sur sensiblement toute la surface du substrat. Ceci permet d'améliorer la perception des images. La réalisation est toutefois plus complexe dans la mesure où les guides 102ᵢ des différents réseaux 150 ne doivent pas se croiser. A titre d'exemple, les guides 102ᵢ peuvent avoir des formes en serpentin et/ou en spirale pour permettre de couvrir la surface du dispositif sans se croiser.

Un autre exemple d'application pouvant tirer profit d'un dispositif de projection distribuée de lumière du type décrit en relation avec les figures 1 à 3 concerne le domaine des émetteurs de type OPA (de l'anglais "Optical Phased Array" ou réseaux optiques à commande de phase), utilisés notamment dans les systèmes LIDAR (de l'anglais "Light Detection And Ranging" - détection et estimation de distance par la lumière) .

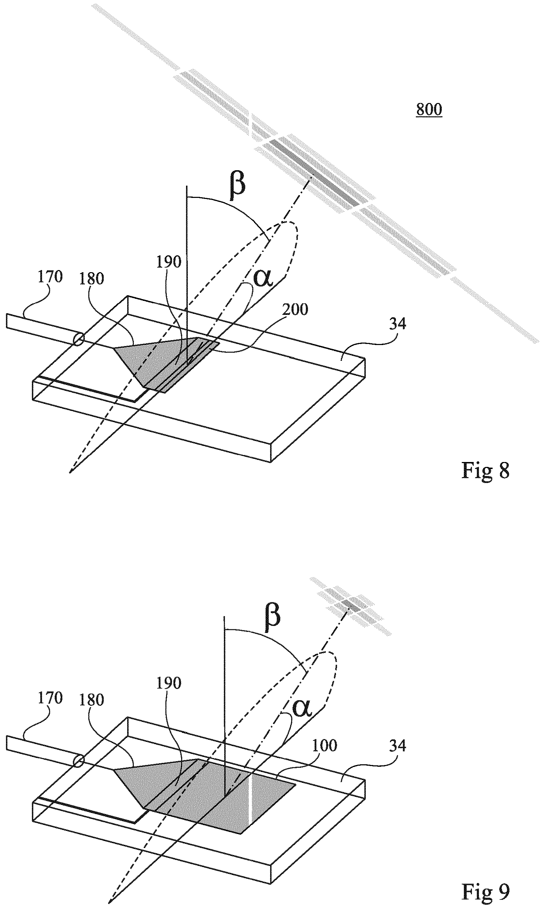

La figure 8 est une vue en perspective illustrant très schématiquement un exemple d'un dispositif 800 de type OPA.

Le dispositif 800 comprend un ensemble 180 de guides d'ondes (non détaillés), par exemple parallèles entre eux, alimentés par une même source laser 170. Ces guides sont couplés à un dispositif 190 commandable pour modifier la phase de la lumière se propageant dans chacun des guides. Le dispositif 190 introduit par exemple un décalage de phase linéaire entre les guides successifs.

La lumière est ensuite extraite des guides, vers l'espace libre, dans une zone d'extraction 200 située en aval du dispositif de déphasage 190.

Au même titre qu'un faisceau traversant un prisme est dévié suivant un angle proportionnel à l'angle du prisme, l'introduction d'une pente linéaire sur la phase produit sur le faisceau extrait des guides une déviation angulaire en champ lointain. Plus le nombre de guides est élevé, meilleure sera la précision sur la valeur de la pente de la phase, et meilleure sera la précision de la déviation angulaire. Toutefois, lorsque la zone d'extraction lumineuse est courte (c'est-à-dire présente une dimension faible dans la direction longitudinale des guides), l'augmentation du nombre de guides conduit à obtenir une zone d'émission de forme allongée, par exemple en forme de ligne. En champ lointain, le signal lumineux extrait du dispositif ressemble alors à une figure de diffraction d'une fente, telle qu'illustrée schématiquement sur la figure 8.

Sur la figure 8, on a noté β l'angle de diffraction en sortie de la zone d'extraction, et α l'angle de déflexion modulable introduit par le dispositif de modification de phase 190. Le faisceau peut être dévié angulairement en modifiant la phase par l'intermédiaire du dispositif 190. Dans le domaine des LIDAR, ceci permet notamment de balayer le faisceau optique en vue de réaliser une cartographie de l'environnement d'un objet, par exemple un véhicule.

La forte dissymétrie du faisceau liée à la forme allongée de la zone d'extraction lumineuse 200 peut être gênante, par exemple lorsqu'une seconde déflexion est introduite par un autre élément, par exemple un miroir mobile dans la direction β. La résolution est alors dégradée dans cette direction. Il serait donc préférable d'obtenir un faisceau diffracté symétrique, le plus petit possible en champ lointain.

La figure 9 est une vue en perspective illustrant de façon schématique un exemple d'un dispositif 900 de type OPA utilisant un dispositif de projection distribuée de lumière du type décrit en relation avec les figures 1 à 3.

Le dispositif 900 de la figure 9 diffère du dispositif 800 de la figure 8 essentiellement en ce que, dans l'exemple de la figure 9, la zone d'extraction 200 du dispositif de la figure 8, de relativement faible longueur, a été remplacée par une zone d'extraction étendue 210 constituée par un dispositif de projection distribuée de lumière du type décrit en relation avec les figures 1 à 3. A titre d'exemple, la dimension de la zone d'extraction dans la direction longitudinale des guides est choisie du même ordre de grandeur que sa dimension transversale, de façon à obtenir une zone d'extraction de forme générale carrée. Les cellules d'extraction 104ᵢⱼ du dispositif (non détaillés sur la figure 9) peuvent être choisies de façon à obtenir une intensité de sortie sensiblement uniforme sur toute la surface de la zone d'extraction, ou de préférence, une intensité de sortie suivant une évolution gaussienne sur la surface de la zone d'extraction, de façon à éviter ou limiter des pics secondaires d'intensité en champ lointain.

Comme l'illustre la figure 9, la diffraction est significativement réduite dans la direction β par rapport à l'exemple de réalisation de la figure 8. Ceci permet d'améliorer la précision du balayage angulaire.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas aux exemples de dimensions et de matériaux mentionnés dans la présente description. De plus, les modes de réalisation décrits ne se limitent pas aux exemples d'utilisations du dispositif de projection distribuée de lumière mentionnés dans la présente description.

Enfin, la mise en oeuvre pratique des modes de réalisation et variantes décrits est à la portée de la personne du métier à partir des indications fonctionnelles données ci-dessus. En particulier, à la lecture de la présente description, la personne du métier saura mettre en oeuvre le dimensionnement et la fabrication du dispositif de projection distribuée, en utilisant des outils usuels de simulation et/ou de fabrication de dispositifs optiques intégrés.

## Revendications

1. Dispositif (100) de projection distribuée de lumière, comprenant :
- un ou plusieurs guides d'ondes (102ᵢ) ; et
- au-dessus de chaque guide d'onde, une pluralité de cellules d'extraction (104ᵢⱼ) couplées à des portions distinctes du guide, chaque cellule d'extraction comportant des premier (D1) et deuxième (D2) réseaux de diffraction superposés,
dans lequel différentes cellules d'extraction (104ᵢⱼ) présentent différentes valeurs de décalage (Δᵢⱼ) entre les premier (D1) et deuxième (D2) réseaux de diffraction, d'où il résulte que les différentes cellules présentent des coefficients d'extraction différents,
dans lequel chaque guide d'onde (102ᵢ) est un guide d'onde monomode,
et dans lequel, dans chaque cellule d'extraction (104ᵢⱼ), les premier (D1) et deuxième (D2) réseaux de diffraction ont le même pas.

2. Dispositif (100) selon la revendication 1, dans lequel, pour chaque guide d'onde (102ᵢ), les différentes cellules d'extraction (104ᵢⱼ) couplées au guide ont des valeurs de décalage (Δᵢⱼ) entre les premier (D1) et deuxième (D2) réseaux de diffraction décroissantes lorsqu'on s'éloigne d'une extrémité d'entrée du guide, d'où il résulte que les différentes cellules présentent des coefficients d'extraction croissants en s'éloignant de l'extrémité d'entrée du guide.

3. Dispositif (100) selon la revendication 1 ou 2, dans lequel les premiers réseaux de diffraction (D1) des différentes cellules sont de même pas, et dans lequel les deuxièmes réseaux de diffraction (D2) des différentes cellules sont de même pas.

4. Dispositif (100) selon l'une quelconque des revendications 1 à 3, comportant plusieurs guides d'ondes (102₁, 102₂, 102₃), dans lequel, les premier (D1) et deuxième (D2) réseaux de diffraction d'une cellule d'extraction (104₁ⱼ) d'un guide d'onde (102₁) se prolongent latéralement en regard des autres guides d'ondes (102₂, 102₃) et forment des cellules d'extraction (104₂ⱼ, 104₃ⱼ) des autres guides d'ondes (102₂, 102₃).

5. Dispositif (400 ; 500) de projection d'une image, comprenant un dispositif (100) de projection distribuée de lumière selon l'une quelconque des revendications 1 à 4, et, en regard de chaque cellule d'extraction (104ᵢⱼ) lumineuse du dispositif de projection distribuée de lumière, un élément holographique (130ᵢⱼ) d'orientation de la lumière extraite par la cellule.

6. Dispositif (400) de projection d'une image selon la revendication 5, comprenant en outre, en regard de chaque cellule d'extraction (104ᵢⱼ), un élément commandable (120ᵢⱼ) d'activation ou de désactivation de la cellule.

7. Dispositif (500) de projection d'une image selon la revendication 5, ne comprenant pas d'éléments commandables d'activation ou de désactivation des cellules d'extraction (104ᵢⱼ).

8. Réseau optique à commande de phase (900) comportant un dispositif (100) de projection distribuée de lumière selon l'une quelconque des revendications 1 à 4, et, en amont de ce dispositif, un dispositif (190) de modification de la phase de la lumière injectée dans les guides d'onde (102ᵢ) du dispositif de projection distribuée de lumière.

## Patentansprüche

1. Eine verteilte Lichtprojektionsvorrichtung (100), aufweisend:
- einen oder mehrere Wellenleiter (102ᵢ); und
- über jedem Wellenleiter eine Vielzahl von Extraktionszellen (104ᵢⱼ), die mit unterschiedlichen Abschnitten des Wellenleiters gekoppelt sind, wobei jede Extraktionszelle ein erstes (D1) und ein zweites (D2) gestapeltes Beugungsgitter aufweist,
wobei verschiedene Extraktionszellen (104ᵢⱼ) unterschiedliche Versatzwerte (Δᵢⱼ) zwischen dem ersten (D1) und dem zweiten (D2) Beugungsgitter aufweisen, wodurch die verschiedenen Zellen unterschiedliche Extraktionskoeffizienten aufweisen,
wobei jeder Wellenleiter (102ᵢ) ein Einmoden-Wellenleiter ist,
und wobei in jeder Extraktionszelle (104ᵢⱼ) das erste (D1) und das zweite (D2) Beugungsgitter den gleichen Abstand aufweisen.

2. Die Vorrichtung (100) gemäß Anspruch 1, wobei für jeden Wellenleiter (102ᵢ) die verschiedenen mit dem Wellenleiter gekoppelten Extraktionszellen (104ᵢⱼ) Offset-Werte (Δᵢⱼ) zwischen dem ersten (D1) und dem zweiten (D2) Beugungsgitter aufweisen, die mit zunehmendem Abstand zum Eingangsende des Wellenleiters abnehmen, wobei die verschiedenen Zellen Extraktionskoeffizienten aufweisen, die mit zunehmendem Abstand zum Eingangsende des Wellenleiters zunehmen.

3. Die Vorrichtung (100) gemäß Anspruch 1 oder 2, wobei die ersten Beugungsgitter (D1) der verschiedenen Zellen den gleichen Abstand haben und wobei die zweiten Beugungsgitter (D2) der verschiedenen Zellen den gleichen Abstand haben.

4. Die Vorrichtung (100) gemäß einem der Ansprüche 1 bis 3, mit einer Vielzahl von Wellenleitern (102₁, 102₂, 102₃), wobei sich das erste (D1) und das zweite (D2) Beugungsgitter einer Extraktionszelle (104₁ⱼ) eines Wellenleiters (102₁) sich seitlich gegenüber den anderen Wellenleitern (102₂, 102₃) erstrecken und Extraktionszellen (104₂ⱼ, 104₃ⱼ) der anderen Wellenleiter (102₂, 102₃) bilden.

5. Eine Bildprojektionsvorrichtung (400; 500), aufweisend eine verteilte Lichtprojektionsvorrichtung (100) gemäß einem der Ansprüche 1 bis 4 und gegenüber jeder Lichtextraktionszelle (104ᵢⱼ) der verteilten Lichtprojektionsvorrichtung ein holografisches Element (130ᵢⱼ) zum Ausrichten des von der Zelle extrahierten Lichts.

6. Die Bildprojektionsvorrichtung (400) gemäß Anspruch 5, die gegenüber jeder Extraktionszelle (104ᵢⱼ) außerdem ein steuerbares Element (120ᵢⱼ) zum Aktivieren oder Deaktivieren der Zelle aufweist.

7. Die Bildprojektionsvorrichtung (500) gemäß Anspruch 5, die keine steuerbaren Elemente zum Aktivieren oder Deaktivieren der Extraktionszellen (104ᵢⱼ) aufweist.

8. Ein optisches Phasensteuerungsnetzwerk (900), das eine verteilte Lichtprojektionsvorrichtung (100) gemäß einem der Ansprüche 1 bis 4 und dieser Vorrichtung vorgeschaltet eine Vorrichtung (190) zum Modifizieren der Phase des in die Wellenleiter (102ᵢ) der verteilten Lichtprojektionsvorrichtung eingespeisten Lichts aufweist.

## Claims

1. Distributed light projection device (100), comprising:
- one or a plurality of waveguides (102ᵢ); and
- above each waveguide, a plurality of extraction cells (104ᵢⱼ) coupled to distinct portions of the guide, each extraction cell comprising first (D1) and second (D2) stacked diffraction gratings,
wherein different extraction cells (104ᵢⱼ) have different offset values (Δᵢⱼ) between the first (D1) and second (D2) diffraction gratings, whereby the different cells have different extraction coefficients,
wherein each waveguide (102ᵢ) is a monomode waveguide, and wherein, in each extraction cell (104ᵢⱼ), the first (D1) and second (D2) diffraction gratings have the same pitch.

2. Device (100) according to claim 1, wherein, for each waveguide (102ᵢ), the different extraction cells (104ᵢⱼ) coupled to the guide have offset values (Δᵢⱼ) between the first (D1) and second (D2) diffraction gratings decreasing as the distance to an input end of the guide increases, whereby the different cells have extraction coefficients increasing as the distance to the input end of the guide increases.

3. Device (100) according to claim 1 or 2, wherein the first diffraction gratings (D1) of the different cells have the same pitch, and wherein the second diffraction gratings (D2) of the different cells have the same pitch.

4. Device (100) according to any of claims 1 to 3, comprising a plurality of waveguides (102₁, 102₂, 102₃), wherein the first (D1) and second (D2) diffraction gratings of an extraction cell (104₁ⱼ) of a waveguide (102₁) laterally extend opposite the other waveguides (102₂, 102₃) and form extraction cells (104₂ⱼ, 104₃ⱼ) of the other waveguides (102₂, 102₃).

5. Image projection device (400; 500), comprising a distributed light projection device (100) according to any of claims 1 to 4, and, opposite each light extraction cell (104ᵢⱼ) of the distributed light projection device, a holographic element (130ᵢⱼ) for orienting the light extracted by the cell.

6. Image projection device (400) according to claim 5, further comprising, opposite each extraction cell (104ᵢⱼ), a controllable element (120ᵢⱼ) for activating or deactivating the cell.

7. Image projection device (500) according to claim 5, comprising no controllable elements for activating or deactivating the extraction cells (104ᵢⱼ).

8. Optical phase-control network (900) comprising a distributed light projection device (100) according to any of claims 1 to 4 and, upstream of this device, a device (190) for modifying the phase of the light injected into the waveguides (102ᵢ) of the distributed light projection device.
